# EUROPEAN PATENT APPLICATION

(11) **EP 1 280 070 A1**
(43) Date of publication of application: **29.01.2003**
(21) Application number: 01118109.6
(22) Date of filing: 26.07.2001
(51) Int. Cl.: G06F 17/30

(54) **Method and computer program for generating a list of items for viewing in a browser**

(71) Applicant: Hewlett-Packard Company, A Delaware Corporation, Palo Alto, California 94304-1112 (US)
(72) Inventor: Larsen, James Gregory, 71065 Sindelfingen (DE)
(74) Representative: Lippich, Wolfgang, Dipl.-Pys., Dr.rer.nat.

(57) **Abstract**

The invention is directed to a method for dynamically generating a list of items for viewing in a browser. The list of items refer to those page description language (PDL) documents from a master list of PDL documents that are available in a computer system. No items are displayed that would refer to PDL documents that are on the master list, but are not available in the computer system. The method comprises the following steps: calling PDL documents according to the master list while preventing them from being displayed, by processing a main PDL document in the browser; identifying those PDL documents that are currently available in the computer system; and selectively displaying those items in the list of items that refer to the identified PDL documents. The invention is also directed to a corresponding computer program.

## Description

The present invention relates generally to electronic documentation technology, and more particularly to a method and a computer program product for generating a list of items for viewing in a browser.

Electronic documentation systems are widely used in many different areas. In some areas, they have almost completely replaced conventional printed documentation systems due to a number of obvious advantages such as convenient search facilities and almost unlimited storage capacity which allows the handling of large documentation. Often these electronic documentation systems comprise several parts that need not all be installed, but can be used separately while having a common framework that combines all these parts. An important kind of electronic documentation systems are online help systems. Nowadays, when installing a software product, a computer system, hardware or network components etc., the user expects to obtain an online help and perhaps as well as a printed manual. These online help systems are usually composed of separate independent parts. Generally, electronic databases are split into several parts, either divided by subjects or simply chronologically by consecutive, e.g. annual, updates. Other highly dynamic environments in which the components of a database and thus the table of contents change rapidly are any kind of Internet search directories such as online journals where journals and articles are published electronically.

In order to access the desired information within these electronic documentation systems the user usually expects to have two possibilities: A search facility by keywords or by means of a table of contents. Therefore programs are commonly delivered together with an online documentation system to provide those search facilities. However, the content of a particular online documentation system depends on its individual installation, in particular to which extent the corresponding database is installed, and may differ from user to user. Especially for the second access alternative by means of a table of contents, these changes have to be taken into account by the access program. The objective is to provide at any time a unified access interface (table of contents) even though only parts of the complete system are installed and therefore only parts of the documentation are available for the user or additional components are added later after the first installation.

Online help systems are usually composed of separate independent parts, for several reasons: First, the software itself comes in different versions, for different platforms, different features and different editions (e.g. professional or standard edition) implying correspondingly modified online help components. Second, the user wants to decide on which parts and to which extent a particular help system is installed on his computer depending for example on the storage capacity of his computer system or the costs of the individual help components. For example, the Windows 2000 help system comprises a large number of components that may or may not be installed depending on the individual configuration of the computer system. Therefore, there are programs available for accessing the different parts of the help information by a table of contents which dynamically adapt themselves according to an individual installation and changes to a previous installation.

A product by Microsoft™, the Microsoft™ HTML (Hypertext Markup Language) Help is able to merge several components of the help system that are represented in individual HTML files during run time, i.e., when the help system is executed. For this purpose, the various HTML files containing the help information are processed and compiled by the help system to a chm-file (Compiled HTML file) combining the several components of the help system in one or more chm-files similar to a Zip-archive file. The chm-files are dynamically adapted to an addition, removal or replacement of HTML files, i.e., to a change of the content of the help system. However, the program runs only under the Windows operating system and uses a proprietary, compiled software program from Microsoft™ that is specific for Microsoft™ operating systems and platforms.

A corresponding online help environment for Unix systems is the CDE (Common Desktop Environment) help. Similar to the Microsoft™ HTML help, it is able to perform a run-time merging of different files corresponding to different components of the online help system by using proprietary compiled program code that suffers from its platform dependency. A specialized help system is the Java™ documentation system in which HTML documentation files and a corresponding table of contents for documenting a JAVA™ source code are generated based on comments embedded in the source code.

Therefore, an online documentation system running independently of the individual platform is desirable that is based on a simple and flexible method for dynamically providing list of items, such as a table of contents and, in particular, that is able to adapt to changes of the content of the documentation systems without using proprietary software.

### SUMMARY OF THE INVENTION

The invention provides a method for dynamically generating a list of items for viewing in a browser. The items refer to those page description language (PDL) documents from a master list of PDL documents that are available in a computer system. No items are displayed that would refer to PDL documents that are on the master list, but are not available in the computer system. The method comprises the following steps: Calling PDL documents according to the master list while preventing them from being displayed, by processing a main PDL document in the browser; identifying those PDL documents that are currently available in the computer system; and selective displaying those items in the list of items that refer to the identified PDL documents.

According to another aspect, the invention provides a method for dynamically generating a list of items for viewing in a browser using only DHTML commands. The items refer to those PDL documents from a master list of PDL documents that are available in a computer system. No items are displayed that would refer to PDL documents on the master list that are not available in the computer system.

According to still another aspect, the invention provides a method for dynamically generating a list of items for viewing in a browser by processing a main PDL document in the browser. The items refer to those PDL documents from a master list of PDL documents that are available in a computer system. No items are displayed that would refer to PDL documents on the master list that are not available in the computer system. The PDL documents have at least one document variable and the availability of the PDL documents is checked on the basis of at least one document variable.

According to yet another aspect the invention is directed to a computer program including program code for carrying out a method for dynamically generating a list of items for viewing in a browser, when the program code is executed on a computer system. The items refer to those PDL documents from a master list of PDL documents that are available in a computer system. No items are displayed that would refer to PDL documents that are on the master list, but are not available in the computer system. The method comprises the following steps: Calling PDL documents according to the master list while preventing them from being displayed, by processing a main PDL document in the browser; identifying those PDL documents that are currently available in the computer system, and selectively displaying those items in the list of items that refer to the identified PDL documents.

According to still another aspect, the invention is directed to a computer program including program code for carrying out a method for dynamically generating a list of items for viewing in a browser by using only DHTML commands when the program code is executed on a computer system. The items refer to those PDL documents from a master list that are available in a computer system. No items are displayed that would refer to PDL documents on the master list that are not available in the computer system.

According to yet another aspect the invention is directed to a computer program including program codes for carrying out a method for dynamically generating a list of items for viewing in a browser by processing a main PDL document in the browser when the program code is executed on a computer system. The items refer to those PDL documents from a master list that are available in a computer system. No items are displayed that would refer to PDL documents on the master list that are not available in the computer system. The PDL documents have at least one document variable and the availability of the PDL documents is checked on the basis of at least one document variable.

Other features are inherent in the disclosed method and computer program or will become apparent to those skilled in the art from the following detailed description of embodiments and its accompanying drawings.

In the accompanying drawings:
FIG. 1 illustrates the generation of a list of items;
FIG. 2 shows an embodiment of the display of the list of items in the browser;
FIG. 3 is a flow diagram of the method for generating a list of items in the browser; and
Fig. 4 shows components of a computer system for generating a list of items in the browser.

### DETAILED DESCRIPTION OF THE PREFERRED EMBODIMENTS

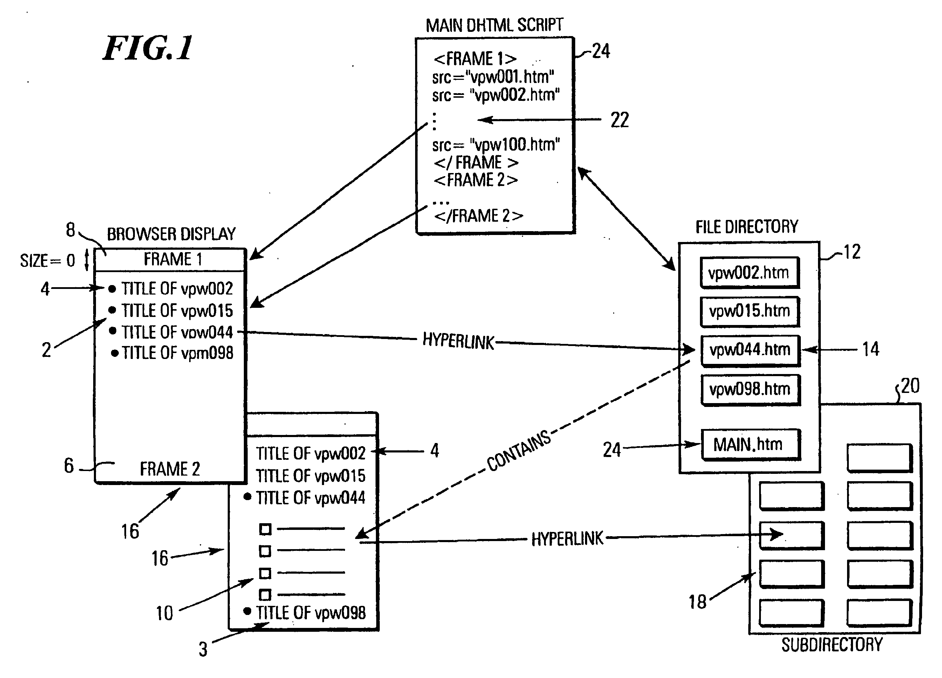

Fig. 1 illustrates the generation of a list of items for preferred embodiments. Before proceeding further with the description, however, a few issues of the preferred embodiments will be discussed.

The term page description language (PDL) refers to a programming language for displaying text and other graphic elements in a formatted and structured way usually in a so-called browser. A browser is a program for viewing PDL documents. Commonly, a page description language is a markup language. A popular page description language is HTML (Hypertext Markup Language), but any other markup language such as XML or SGML may be used provided that a suitable browser is available. In a page description language, format commands and the text to be formatted are closely combined in one document usually encoded in ASCII format. A characteristic of a page description language is that programming commands and data are not separated. In HTML and other page description languages, the commands for giving the text its structure are called "tags". On top of that, on another software layer, the format of the text is defined by means of Cascading Style Sheets (CSS) and the absolute, pixel-wise positioning of text and image elements by means of the so-called Cascading Style Sheets-Positioning (CSS-P). A page description language comprises all those different layers of formatting and structuring elements of a mark-up language.

As already mentioned, a browser is a program for displaying PDL documents on a computer screen. As usual, the documents are the electronic files. In the preferred embodiment script commands are used, some of which make use of the Document Object Model (DOM) (see J. Robie (Ed): What is the Document Object Model? REC-DOM-Level-1-19981001, http:/www.w3org/TR/REC-DOM-Level-1/introduction.html). The DOM is a hierarchical tree structure of the elements of a HTML document. It permits changes of the attributes of the document elements such as style attributes during run-time and thus enables a script language such as JavaScript™ to dynamically modify document attributes. Effectively there are only two browser manufacturers on the market, i.e., Netscape™ and Microsoft™ with their corresponding browsers Netscape Navigator™ and Microsoft™ Internet Explorer. The Document Object Model (DOM) used in the preferred embodiments of the invention is supported by Netscape Navigator™ 6.0 or Microsoft™ Internet Explorer 4.0 or later versions. However, other embodiments may use other browsers, including browsers not supporting the Document Object Model but permitting changes of the attributes of the documents.

A frame is a structuring element of a page description language dividing the display of a browser into several parts whereas the size and the position of the frames can be controlled using HTML commands.

DHTML stands for Dynamic Hypertext Markup Language, i.e., dynamic HTML. It is a generic term for a number of different, already existing and compatible Web technologies. More precisely, DHMTL comprises the following five components: Hypertext Markup Language (HTML), Cascading Style Sheets (CSS), Cascading Style Sheets-Positioning (CSS-P), Document Object Model (DOM) and a scripting language (see M. Mann: Dynamic HTML, 2000, page 14). While JavaScript™ is the most common scripting language used for DHTML, other languages can also be used, such as JScript or VBScript. DHTML provides the former rather static HTML with more flexibility to implement dynamic effects and user interaction into page description language documents controlled by scripts or triggered by user events.

In the preferred embodiments, a list of items is dynamically generated and viewed in a browser by processing a main PDL document in the browser. This list of items may be a table of contents of a complete documentation comprising other PDL documents that are stored in a computer system or any other list of items such as a list of references to other documents regarding for example a certain subject. The processing of the main PDL document controls the display of the items, i.e., which items are displayed and how they are displayed. Only those items are displayed, that refer to documents, that are available in the computer system. Or in other words, those items that refer to PDL documents that are not available in the computer system are not displayed. Documents are available in the computer system usually when they are installed at a location, to which the browser of the user has access. The aim is, to display only those items of a table of contents whose corresponding documentation is installed on the system. Often, online documentation systems are not completely installed on a user system, i.e., only parts of the documentation system are available. Therefore, the method of the preferred embodiments intends to prevent items of components of the online documentation system that are not installed from being displayed in the table of contents. The purpose is not to bother the user with information that he cannot access. When the item of a table of contents is directly linked to the corresponding part of the documentation by a hyperlink, the activation of a hyperlink referring to parts of the documentation that are not installed would yield an undesirable error message or a similar message. All the above-mentioned undesirable effects would occur if the table of contents was static, i.e., unable to adapt itself to an individual installation of the online documentation system.

In the preferred embodiments a generated list of items (table of contents) is not only adapted once to a first individual installation of an online documentation system but modifies itself dynamically each time the list of items is generated. Therefore, it can also react to changes of the first installation, i.e., the installation of new components or the de-installation of old components, and can therefore also be applied in highly dynamic environments where the content of the documentation system changes rapidly.

The main PDL document is not required to be changed for the adaptation process, in other words, the adaptation is performed automatically only based on the components of the documentation system that are available in the computer system. Therefore, the main PDL document is not changed even during the installation of new components or the de-installation of old components of the documentation system.

The first document, the main PDL document, is loaded when the user selects that document in the browser and gives the browser the command to load the document. In the preferred embodiments the first step of the method, after loading the main PDL document in the browser, is to call PDL documents according to a master list of PDL documents that is preferably stored in the main PDL document. Usually, in DHTML, calling a PDL document from another PDL document means loading it using the "src"-property ("src" stands for "source"). Loading a PDL document using the "src"-property implies automatically the display of the content of the PDL document as well as the execution of the script procedures and functions contained in or referenced by the PDL document. At this stage of the method one is only interested in executing the script functions contained in the PDL documents that are called by the main PDL document (these script functions are used for identifying those PDL documents that are currently available in the computer system). Therefore, measures are taken to prevent the content from being displayed.

It should be noted that the program does not yet know at this stage whether the loaded PDL document in fact exists. In cases where the called PDL document does not exist, i.e., is not available in the computer system, the PDL document is not actually loaded, only an attempt to load it is performed. In order to take into account this issue, the term "call" seems to be more appropriate than the term "load" and additionally indicates that within the PDL document function "calls" take place.

The idea behind this procedure is, that by calling the PDL documents into the main PDL document all the variables associated with the corresponding PDL documents can be accessed from the main PDL document using preferably the access mechanism provided by the Document Object Model (DOM). These variables associated with the corresponding PDL documents are preferably document attributes such as the title of the document.

Coming back now to the second step of the method in which those PDL documents that are currently available in the computer system are identified. In the preferred embodiments this identification is performed by checking at least one document variable of the corresponding PDL documents that are preferably created automatically when the corresponding PDL document is loaded in the main PDL document. Most preferably, the existence of one or more such variables, for instance certain document attributes, is used to decide on the availability of the corresponding PDL document in the computer system.

Finally, the items that refer to the identified PDL documents are selectively displayed in the list of items. On the other hand, those that are not identified, and thus are not available in the computer system, are not displayed so that the user is not confused by list items for which no documentation exists in the online documentation system or receives error messages when trying to access the references of those items.

As already mentioned, in the preferred embodiments, the list of items is a table of contents for a collection of documentation. However, it may likewise be a collection of topically unrelated references. Only those parts of the documentation that are installed on the computer system are displayed and thus accessible by the user. This method is preferably applied in an electronic documentation system that serves as an online help system.

In DHTML, graphical output and logical or computational operations are mixed in one PDL document. In the first step of the method of the preferred embodiments only procedures (e.g., JavaScript procedures) of the PDL documents are intended to be executed and thus measures have to be taken to avoid the content of the PDL documents being displayed as well. Preferably, the called PDL documents are therefore loaded in one or more frames of the main PDL document from which they are called and then the items of the list of items are selectively displayed in one or more other frames of the main PDL document. In this way, those two data streams are separated into different frames of the browser. The advantage now is that they can be handled separately from each other. In the preferred embodiments, the called PDL documents are prevented from being displayed in an easy way by loading them in at least one frame of the main PDL document with vanishing size, i. e., with size zero in horizontal and/or vertical direction. Using this trick, the frame becomes a "virtual" frame not visible to the user but the corresponding document variables and attributes can be accessed.

A convenient way to implement the preferred embodiments is to store the PDL documents to which the list of items refers in a directory of the computer system. This is particularly suitable if the PDL documents belong to a complete set of documentation which should ideally be grouped together in a directory. However, a directory is certainly not limited to one particular file directory of the computer system, but rather comprises a certain localized area within the file system including sub-directories or even trees of sub-directories, especially for large online documentation systems. On the other hand, the storage location of the PDL documents is not limited to a single computer system or storage disk but might be distributed over a network or is accessed over a network. In one preferred embodiment the PDL documents for example of an online documentation system are stored only at one location (server) within a network being accessed by a number of users from different desktop computers (clients). This client server architecture can be realized in all kind of networks, such as intranets and the Internet. In practice it would be best to have all PDL documents (sub-Tables of Contents) in one directory. The PDL documents could then reference other documents on other computers, if necessary. While it would work well to have the PDL documents on other computers, the preferred embodiments have everything on one computer.

In the preferred embodiments the items or at least parts of the items in the list of items represent hyperlinks to the corresponding PDL documents. This provides a very convenient way for the user to access the desired information and documents. In one preferred embodiment the display of the browser is arranged in a way that the list of items and a selected document are viewed simultaneously in the browser so that the user still has access to the table of contents while reading a particular document.

An item of the list of items is not necessarily only a single line or a single reference to one document but can preferably be a reference comprising text fragments or images as well as sub-references or a whole list of sub-references. An item may therefore be a more general and high-level part of a table of contents. In one preferred embodiment the sub-levels of one or more items are displayed in the browser wherein more than one sub-level may be displayed at once. Most preferably the user is able to "toggle" (i.e. to choose) between a display comprising the sub-levels of an item or a display without those sub-levels either globally for all items at once or individually for each item, for instance, by selecting the item in question with a pointing device, such as a mouse. In the preferred embodiments the text displayed for each item of the list of items comprises the title of the corresponding PDL document to which the item refers. The advantage is that in this way the author of the corresponding PDL document controls the text of the item and therefore a meaningful text is guaranteed.

In the preferred embodiments only DHTML commands are used for dynamically generating a list of items that refer to PDL documents that are available in a computer system wherein items that refer to PDL documents that are not available in the computer system are not displayed. Preferably, these DHTML commands are HTML and JavaScript commands. Using only DHTML commands for implementing the generation of the list of items means that no proprietary software is used which has a number of advantages. DHTML is most commonly used in Internet technology for displaying Web-sites. In view of the ubiquitous use of the Internet, DHTML was accepted and established by all browser manufacturers, in particular by Microsoft™ and Netscape™, as the standard page description language in the Web and is therefore highly supported by browsers, in particular the Microsoft™ Internet Explorer and the Netscape Navigator™. Again due to the enormous usage of the Internet and, in particular, the World Wide Web, the browsers for viewing Web pages have been implemented for all different platforms and operating systems while providing the same functionality and supporting most features of DHTML. Therefore, using only DHTML commands for the implementation the method becomes independent of a particular operating system. In other words, the method uses the Web technology as a vehicle to become platform independent although data transfer over the Internet and thus Internet technology is not necessarily required for the preferred embodiments.

Another advantage by using only DHTML commands is that the method becomes independent of a particular browser since, for the reason explained above, most browser manufacturers support DHTML (at least a basic implementation of the DOM) as standard page description language. Most preferably those DHTML commands are used for the implementation of the methods that are running independently of a particular operating system and a particular browser.

The preferred embodiments of the computer program product comprise program code which, for example, is stored on a computer readable data carrier or is in the form of signals transmitted over a computer network.

Now coming back to Fig. 1 which depicts schematically the generation of a list of items 2 the preferred embodiments are further described in detail. Fig. 1 illustrates two different options for displaying the list of items 2 and 3 between which the user can toggle interactively. According to the first display option, a list of items 2 (here: a table of contents) is displayed. The items 4 are essentially references or hyperlinks to PDL documents and preferably to DHTML documents 14 that are stored in a directory 12 of a computer system. The DHTML documents 14 contains sub-levels of the items 4 of the list of items. According to the second display option, the list of items 3 is displayed together with the sub-levels 10 of at least one item 4. The sub-levels 10 represent hyperlinks to further DHTML documents 18 that are stored in a sub-directory 20 of the main directory 12. The DHTML documents 18 contain the actual information that is indicated by the respective items 4 and 10.

Based on a master list of file names 22 a main PDL document 24, here a DHTML document that is also stored in the directory 12, calls all possible files 22 which together form the complete documentation from the directory 12. The directory 12, however, contains only the currently installed PDL documents 14 which generally form a sub-set of the complete documentation. By evaluating document variables that are automatically created during the calls of the PDL documents 22, the DHTML script 24 determines which of the possible PDL documents 22 are currently in fact installed in the directory 12, as will be explained below. In other embodiments (not shown) there is no toggle functionality. For example, all existing sub-level items 10 can be displayed always together with the items 4. Alternatively, no sub-level items 10 may be provided. Then, the items 4 refer directly to the DHTML documents 18 in the subdirectory 20.

In DHTML the loading of other DHTML files 22 into the main DHTML script using the "src"-command is combined with the display of the content of the loaded DHTML documents. At the time of the loading it is not desirable for all the loaded files to be directly displayed or error messages (or empty lines) if a loaded file is not available in the computer system. In order that the loaded files (or error messages or empty lines) are not displayed, the calls to the DHTML documents 22 are performed within a first frame 8 of which the height has been set to 0. By consequence, none of the called DHTML documents 22 are visible in the browser 16 for the user. After the determination of those DHTML documents 12 that are actually installed on the computer system, only the title of those DHTML documents 12 are displayed as items 4 of the list of items 2 in a second, regular sized frame 6. Thus, only items 4 with hyperlinks to installed DHTML documents 14 are visible and accessible for the user in the browser display 16.

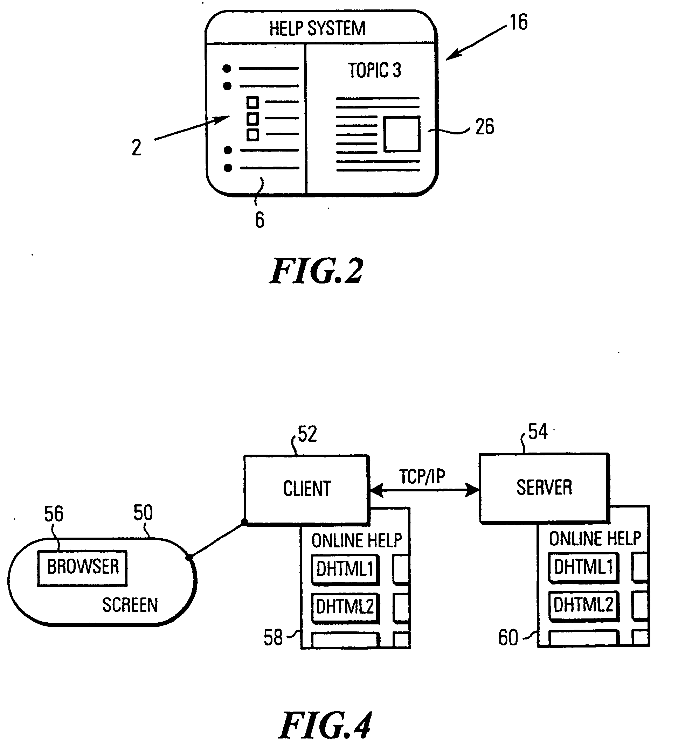

When the user selects a hyperlink of a sub-level 10 of the item 4 that references to a DHTML document 18 there are several alternatives on how the content of the referenced DHTML document 18 can be displayed. One alternative is to open a new browser window 16 and display the content of the DHTML document 18 therein. The advantage is that the user can read the referenced document by still having the table of contents or the list of items displayed in another window for choosing further documents. Another alternative is to display the content of the referenced DHTML document 18 in the same browser display 16 in which the list of item has been displayed before. According to a third alternative shown in Fig. 2 the display 16 of the browser is split into several frames 6 and 26 or possibly more, of which one displays the list of items 2 and an other the content of the referenced document. This solution combines the advantage of having only one browser window open while being able to select an other document from the table of contents when reading the content of an previously selected DHTML document.

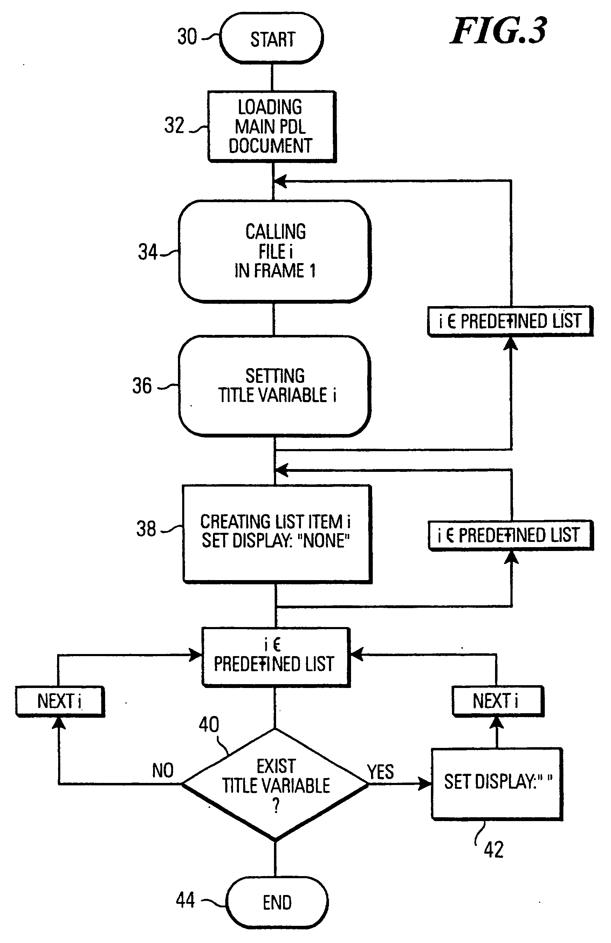

In Fig. 3 a flow diagram of the method for generating a list of items in the browser is shown. After the start 30 of the program in step 32 the main DHTML document is loaded in the browser. By basically executing the following DHTML code (corresponding to step 34), the main DHTML document calls a number of DHTML documents "vpw001.htm", "vpw002.htm", ..., "vpw100.htm" according to a master list of all possible DHTML documents belonging to the online documentation system in question:

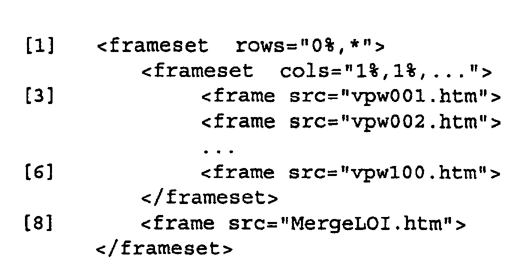

The HTML "src"-property loads the corresponding documents and thus, not only the JavaScripts and functions contained in the document are executed but also its content is displayed. In order to avoid the display of the content of the DHTML documents at this time, in line [1] the size of the corresponding frame is set to 0. Therefore nothing is displayed in the browser when lines [3] to [6] are executed. However, the second part of the frameset has regular size so that everything that is displayed during the execution of the DHTML document "MergeLOI.htm" (line [8]) is visible in the browser. The DHTML documents "vpw001.htm", "vpw002.htm", ..., "vpw100.htm" called in line [3] to [6] basically contain the following lines of code (the shown examples actually refer to vpw001.htm):

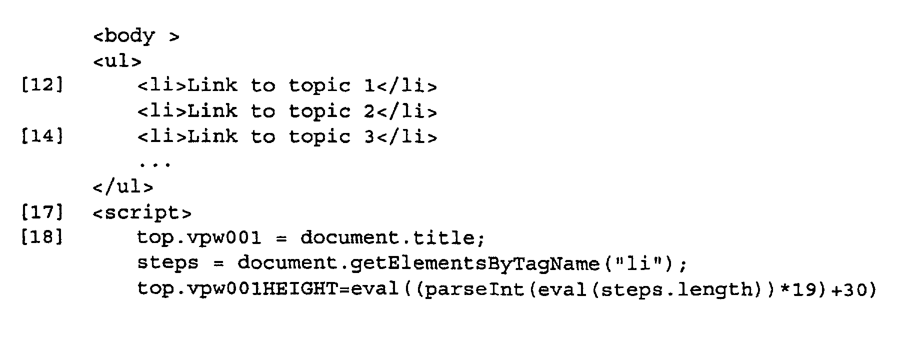

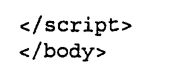

Lines [12] to [14] are not displayed in the frame of the browser due to its vanishing size. However, while executing the JavaScript starting in line [17] the title variables top.vpw001, top.vpw002, ..., top.vpw100 are set in line [18] of the code fragment to the value of the document title respectively (corresponding to step 36 of Fig. 3). If a called DHTML document does not exist in the relevant directory of the computer system, no such title variable is created. Calling "MergeLOI.htm" in line [8] of the main DHTML document creates for all possible DHTML documents according to the master list a list item (<li>...</li>) by executing the following DHTML commands (corresponding to step 38 of Fig. 3):

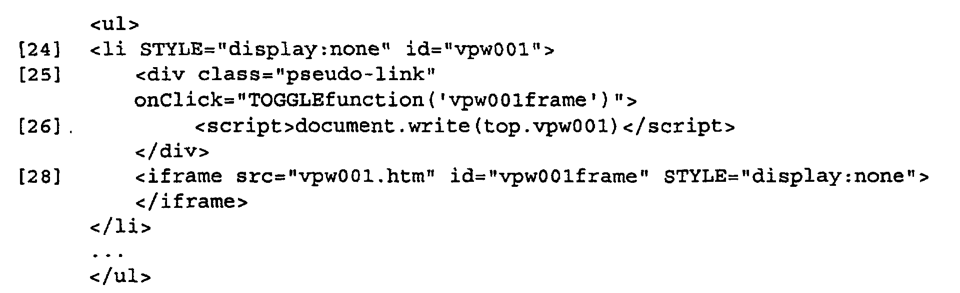

However, the display style of each list item is set to "none" causing the list item not to be displayed according to line [24] of the above code fragment. The text to be displayed with the item is assigned in line [26] by calling the JavaScript function "document.write(top.vpw001)". In line [28] an internal frame is defined containing the sub-level items of the corresponding item. Those sub-level items are contained in the DHTML documents "vpw001.htm", "vpw002.htm", ..., "vpw100.htm" respectively if they are installed on the computer system. However, also the display style of the internal frame for the sub-level items is set to "none" thus rendering it invisible (line [28]).

For the toggle functionality, in line [25] an event handler "onCLICK" is defined and the JavaScript™ function "TOGGLEfunction" is assigned to it. This function is called when the user selects an item 4 of the list of items 2 or 3 in the browser 16 as shown in Fig. 1. The function causes the sub-level items 10 of the selected item 4 to be displayed or to disappear in the list of items 2 or 3. The JavaSript™ function "TOGGLEfunction" is defined as follows:

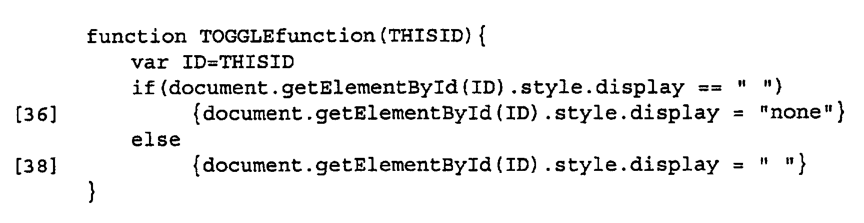

When called by the event handler because the user has clicked on a list item, the function toggles the display style of the internal frame containing the sub-level items between "none" (line [36]) and " " (line [38]). The display style " " means that the corresponding internal frame is visible in the display of the browser corresponding to the list of items 3 whereas the display style "none" corresponds to a list of items 2 as shown in Fig. 1. Therefore the JavaScript™ function "TOGGLEfunction" is responsible for the toggle between the two display options with or without sub-level items when the user clicks on the corresponding item.

The identification of the available documents and the selectively displaying of the corresponding items is performed by running the following JavaScript™ contained in "MergeLOI.htm" (corresponding to step 40 of Fig. 3):

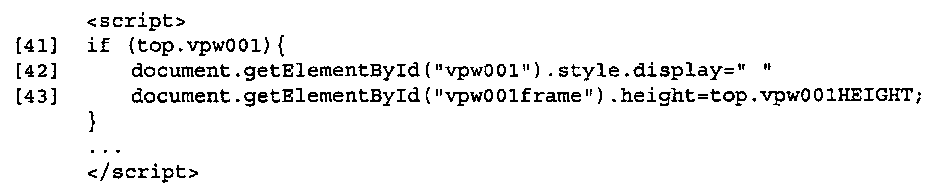

For all DHTML documents of the master list of document names the existence of the corresponding title variable "top.vpw001", "top.vpw002", ..., "top.vpw100" is evaluated with the if-condition in line [41]. If the title variable exists, i.e. the corresponding DHTML document is installed in the directory of the computer system, the display style of the corresponding item is set in step 42 or line [42] respectively to the value of " " meaning that the item is displayed. In addition, the appropriate height of the corresponding internal frame for optionally receiving sub-level items is assigned in line [43]. In the case that the title variable of a particular DHTML document does not exist since the DHTML document has not been found in the directory of the computer system the display style of the corresponding item is not changed meaning that it is not visible in the display of the browser. After this identification of the installed DHTML documents and the selective displaying of those DHTML documents that are installed is accomplished the program ends in step 44 of Fig. 3.

A system for executing a method of the preferred embodiments for generating a list of items for viewing in a browser typically comprises a screen display 50 with the display of the browser 56 that is connected to a client computer 52 as illustrated in Fig. 4. In the preferred embodiments the online help system comprising a number of DHTML documents 58 or 60 is either installed on the client 52 or on a remote server 54 that is connected to the client for instance via a TCP/IP connection.

Thus, a general purpose of the disclosed embodiments is to provide an improved, simple and flexible method for generating a list of items for viewing in a browser depending on the installation of DHTML documents to which the list of items refers. The method does not use any proprietary software and runs independently of the operating system, the computing platform and the browser used in a particular realization of the method.

All publications and existing systems mentioned in this specification are herein incorporated by reference.

Also certain methods, systems and products constructed in accordance with the teachings of the invention has been described herein, the scope of coverage of this patent is not limited thereto. On the contrary, this patent covers all embodiments of the teachings of the invention fairly falling within the scope of the attended claims either literally or under the doctrine of equivalence.

## Claims

1. A method for dynamically generating a list of items for viewing in a browser, wherein the items refer to those page description language (PDL) documents from a master list of PDL documents that are available in a computer system, wherein no items are displayed that would refer to PDL documents that are on the master list, but are not available in the computer system, the method comprising the steps of:
calling PDL documents according to the master list while preventing them from being displayed, by processing a main PDL document in the browser;
identifying those PDL documents that are currently available in the computer system; and
selectively displaying those items in the list of items that refer to the identified PDL documents.

2. The method of claim 1, wherein the list of items is a table of contents.

3. The method of claim 1 or 2, wherein the table of contents refers to a complete documentation of which the parts that are not installed on the computer system are not displayed in the table of contents.

4. The method of claim 3, wherein the documentation is an online help system.

5. The method according to anyone of the preceding claims, wherein the called PDL documents are first loaded in one or more frames of the main PDL document and the items are then selectively displayed in one or more other frames of the main PDL document.

6. The method according to anyone of the preceding claims, wherein the called PDL documents are loaded in one or more frames of the main PDL document with vanishing size and are therefore not displayed.

7. The method according to anyone of the preceding claims, wherein the PDL documents to which the list of items refers are stored in a directory of the computer system.

8. The method according to anyone of the preceding claims, wherein one or more variables associated with the PDL documents are checked to determine whether the corresponding items are displayed.

9. The method according to anyone of the preceding claims, wherein the list of items comprises hyperlinks to the corresponding PDL documents.

10. The method according to anyone of the preceding claims, wherein sublevels of the list of items are displayed in the browser.

11. The method of claim 10, wherein sublevels of the list of items are displayed in the browser after user interaction.

12. The method according to anyone of the preceding claims, wherein the text displayed for each item of the list of items is essentially the title of the corresponding PDL document.

13. A method for dynamically generating a list of items referring to those page description language (PDL) documents from a master list that are available in a computer system for viewing in a browser by using only DHTML commands, wherein no items are displayed that would refer to PDL documents on the master list that are not available in the computer system.

14. The method of claim 13, wherein the method is independent of a particular operating system.

15. The method of claim 13 or 14, wherein the method is independent of a particular browser.

16. The method according to anyone of claims 13 to 15, wherein the DHTML commands are independent of at least one of i) a particular operating system and ii) a particular browser.

17. The method according to anyone of claims 13 to 16, wherein the DHTML commands are HTML and JavaScript™ commands.

18. A method for dynamically generating a list of items referring to those page description language (PDL) documents from a master list that are available in a computer system for viewing in a browser by processing a main PDL document in the browser, wherein no items are displayed that would refer to PDL documents on the master list that are not available in the computer system, wherein the PDL documents have at least one document variable, and wherein the availability of the PDL documents is checked on the basis of at least one document variable.

19. The method of claim 18, wherein the variables used for checking the availability of the corresponding PDL documents are variables that are automatically created when the corresponding PDL documents are loaded in the main PDL document.

20. The method of claim 18 or 19, wherein the variables used for checking the availability of the corresponding PDL documents are variables that define certain properties of the corresponding PDL documents.

21. The method according to anyone of claims 18 to 20, wherein the variables used for checking the availability of the corresponding PDL documents are variables that provide the title of the corresponding PDL documents.

22. A computer program including program code, when executed on a computer system, for carrying out a method according to anyone of the preceding claims.
